# EUROPÄISCHE PATENTSCHRIFT

(11) **EP 1 529 010 B1**
(45) Veröffentlichungstag und Bekanntmachung des Hinweises auf die Patenterteilung: **01.02.2006**
(21) Anmeldenummer: 03740242.7
(22) Anmeldetag: 13.06.2003
(51) Int. Cl.: B65G 45/16

(54) **TROMMELABSTREIFER**
CYLINDER STRIPPER
RACLETTE DE TAMBOUR

(30) Priorität: 14.08.2002 DE 10237986
(43) Veröffentlichungstag der Anmeldung: 11.05.2005
(73) Patentinhaber: Schwarze, Hans-Otto, D-45665 Recklinghausen (DE)
(72) Erfinder: Schwarze, Hans-Otto, D-45665 Recklinghausen (DE)
(74) Vertreter: Wenzel & Kalkoff
(86) Internationale Anmeldenummer: PCT/EP2003/006235
(87) Internationale Veröffentlichungsnummer: WO 2004/018331

(56) Entgegenhaltungen:
- EP-B- 0 739 303

## Beschreibung

Die Erfindung betrifft eine Vorrichtung zum Abstreifen von Verunreinigungen von Gurtbändern in Förderbandanlagen im Bereich einer Antriebs- und/oder Umlenktrommel des Gurtbandes
- mit einem an einem Gurtbandtraggerüst zu befestigenden Systemträger,
- an dem zumindest ein Abstreifelement angeordnet ist,
- wobei das Abstreifelement eine an einer Lamellenstütze angebrachte Abstreiflamelle aufweist,
- die in der Abstreifposition schälend an dem Gurtband anliegt,
- und wobei das Abstreifelement ein mit der Lamellenstütze verbundenes unteres Drehgelenk mit horizontaler Drehachse - Angaben wie "horizontal" oder dergleichen betreffen hier und im folgenden grundsätzlich die Gebrauchslage des Abstreifelementes-
- sowie eine zum Andrücken der Abstreiflamelle an das Gurtband auf die Lamellenstütze wirkende Federvorrichtung in derartiger Ausbildung und Anordnung aufweist,
- daß die Lamellenstütze in der Abstreifposition der Abstreiflamelle federbelastet um die horizontale Drehachse geschwenkt ist
- und beim Auftreffen von fest am Gurtband anhaftenden Hindernissen auf die Abstreiflamelle leicht wegschwenken und wieder in die betriebsbereite Lage am Gurtband zurückschwenken kann.

Bei einer bekannten Abstreifvorrichtung dieser Art (EP o 739 303 Bi) weist die Lamellenstütze ein Drehlager mit begrenztem Drehwinkel in derartiger Anordnung auf, daß sich die am Gurtband anliegende Abstreiflamelle Neigungsänderungen des Gurtbandes durch selbsttätige Drehung anpassen kann. Das Drehgelenk mit der auf die Lamellenstütze wirkenden Federvorrichtung besteht aus einem Torsionsfedergelenk, das an einer Einsteckvorrichtung befestigt ist. Bei dieser bekannten Vorrichtung wird ein sehr gutes Abstreifergebnis erzielt, das dem Bereich der Feinreinigung zuzuordnen ist. Für Bedarfsfälle, in denen grundsätzlich oder zeitweise große Mengen an an dem Gurtband anhaftendem Gurt anfällt, das abgestreift werden muß, kann diese Abstreifvorrichtung überfordert werden. In solchen Fällen werden deshalb Vorabstreifer vorgeschaltet, die für das Abstreifen großer Gutmengen von dem Gurtband ausgelegt sind.

Eine als Vorabstreifer ausgebildete Abstreifvorrichtung für den Trommelbereich besteht aus über die Gurtbandbreite nebeneinander auf einem Systemträger gemeinsam angeordneten Kunststoffblöcken, die zum Abstreifen jeweils mit einer Abstreifkante an den Gurt schwenkbar und andrückbar sind. Fest am Gurtband anhaftenden Hindernissen können die Blöcke aufgrund der Elastizität des Kunststoffmaterials ausweichen. Die Abstreifkanten der Blöcke unterliegen jedoch insbesondere bei hohen Gurtgeschwindigkeiten starkem Verschleiß. Darüberhinaus fällt der Materialabtrag an den Abstreifkanten sehr unterschiedlich aus, so daß die Abstreifltanten einen unregelmäßigen Verlauf zeigen und die Abstreifleistung ungleichmäßig ist.

Es besteht deshalb die Aufgabe, eine Vorrichtung zu schaffen, die sich im Trommelbereich des Gurtbandes mindestens als Vorabstreifer mit gleichmäßiger Abstreifleistung einsetzen läßt und lange Standzeiten auch bei hohen Gurtgeschwindigkeiten erreicht, die mit entsprechend großen Gutmengen verbunden sind, die im Trommelbereich abzustreifen sind.

Erfindungsgemäß wird diese Aufgabe dadurch gelöst, daß
- die Abstreiflamelle an der Lamellenstütze durch ein oberes Drehgelenk mit horizontaler Drehachse schwenkbar gelagert und
- durch eine obere Federvorrichtung unter Federvorspannung gehalten ist, deren Federwirkung - bezogen auf das untere Drehgelenk und dessen Federvorrichtung - gegensinnig ist

Ein Abstreifelement der erfindungsgemäßen Abstreifvorrichtung zeichnet sich dadurch aus, daß die Lamellenstütze mit der Abstreiflamelle, wenn ein fest am Gurtband anhaftendes Hindernis auf die Abstreiflamelle auftrifft, leicht wegschwenken und wieder in die Abstreifposition am Gurtband zurückschwenken kann, wie es bspw. bei der eingangs bekannten Abstreifvorrichtung der Fall ist. Aber das Ausweichen der Abstreiflamelle wird erfindungsgemäß nach einem neuen Prinzip erreicht, bei dem das untere federbelastete Drehgelenk der Lamellenstütze nun mit einem oberen Drehgelenk ander Lamellenstütze, nämlich dort, wo die Abstreiflamelle an der Lamellenstütze angebracht ist, zusammenwirkt, und zwar sowohl im normalen Abstreifbetrieb als auch dann, wenn die Abstreiflamelle einem Hindernis am Gurtband ausweichen muß.

Im normalen Abstreifbetrieb bewirkt primär das untere Drehlager durch eine vorbestimmte Vorspannung der auf die Lamellenstütze wirkenden Federvorrichtung eine gleichbleibende Anlage der Abstreiflamelle am Kopf des Gurtbandes. Das obere Drehgelenk hält im Zusammenwirken mit der oberen Federvorrichtung die Abstreiflamelle in der gewünschten Abstreifposition mit schälender Anstellung der Abstreiflamelle am Gurtband. Je nach den Arbeitsbedingungen kann das federbelastete obere Drehgelenk auch dazu beitragen, eine für eine gleichbleibend hohe Abstreifleistung maßgebliche enge Anlage der Abstreiflamelle am Gurtband zu erreichen. Denn schon geringe Unebenheiten am Gurtband würden insbesondere bei höheren Geschwindigkeiten ein kurzzeitiges Abheben der Abstreiflamelle zur Folge haben, und zwar u. U. mit einer längeren Rückkehrdauer, wenn die Rückführung der Abstreiflamelle in die Abstreifposition am Gurtband allein von der unten wirkenden Federvorrichtung bewirkt wird.

Im Notfall, wenn nämlich ein größeres Hindernis am Gurtband auf die Abstreiflamelle auftrifft, das sich nicht ohne weiteres abstreifen läßt, treten beide federbelasteten Drehgelenke in Funktion und lösen die Abstreiflamelle für Bruchteile einer Sekunde vom Gurt, so daß das Hindernis an der Abstreiflamelle vorbeilaufen kann, wie nachstehend erläutert wird.

Wenn ein fest am Gurtband haftendes Hindernis z. B. ein sog. Gurtschaden auf die Abstreiflamelle auftrifft, kann die Abstreiflamelle ihre Abstreifposition am Gurtband leicht verlassen. Die Abstreiflamelle wird an ihrer Abstreifkante von dem Hindernis erfaßt und mitgenommen. Dabei kann sie eine Schwenkbewegung um die Drehachse des oberen Drehgelenks ausführen, wobei die Federkraft und damit die Rückstellkraft der vorgespannten Federvorrichtung zunimmt Dieser Schwenkbewegung der Abstreiflamelle überlagert sich eine gegensinnige Schwenkbewegung der Lamellenstütze um das untere Drehgelenk durch die von der Abstreiflamelle übertragenen Reaktionskräfte des Gurtbandes. Dabei nimmt die Federspannung der auf das untere Drehgelenk wirkenden Federvorrichtung weiter zu, so daß auch hier die Rückstellkraft wächst. Spätestens wenn der während dieser Schwenkbewegung zunehmende Abstand der oberen Drehachse von dem Gurtband so groß wird wie der Abstand zwischen der oberen Drehachse und der Abstreifkante, beginnt sich die Abstreiflamelle von dem Hindernis zu lösen und das Hindernis kann unter der Abstreiflamelle durchlaufen.

Der Ablauf der beiden sich überlappenden Schwenkbewegungen hängt maßgeblich von den Massekräften insbesondere im Bereich der Abstreiflamelle und des oberen Drehlagers einschließlich der dort wirkenden Federvorrichtung und von den sich daraus ergebenden Drehmomenten ab. Je geringer die Masse dieser Bauteile, also der Bauteile am Kopf der Lamellenstütze, ist, desto schneller und vor allem auch leichter kann die Abstreiflamelle bei auftreffenden Hindernissen reagieren, nämlich ausweichen.

Insbesondere bei schnell laufenden Gurtbändern und hohen Massekräften sowie je nach Größe des an dem Gurtband anhaftenden Hindernisses kann das durch den Aufprall des Hindernisses auf die Abstreiflamelle bewirkte Wegschwenken der Lamellenstütze um das untere Drehgelenk noch anhalten oder die Rückkehr der Lamellenstütze gerade beginnen, wenn die gegensinnige Schwenkbewegung der Abstreiflamelle um das obere Drehgelenk, die im wesentlichen von der Gurtgeschwindigkeit abhängt, bereits erfolgt ist oder kurz vor dem Abschluß steht. Auf diese Weise kann die Rückkehr der Abstreiflamelle in ihre betriebsbereite Lage an der Lamellenstütze so schnell erfolgen, daß die Abstreiflamelle nicht zunächst mit der Abstreifkante sondern gleich wieder mit ihrer schrägen Abstreiffläche auf dem Gurtband aufsetzt. Dies trägt zur Gurtschonung und zu einer größtmöglichen Verkürzung der Unterbrechung des Abstreifbetriebs bei, auch wenn es sich bei der Unterbrechungsdauer ohnehin nur um Millisekunden handelt.

Aufgrund des erfindungsgemäßen Aufbaus der Abstreiflamelle und ihrer Wirkungsweise im normalen Abstreifbetrieb wie im Notfall beim Auftreten von Hindernissen wie Gurtschäden wird eine für Vorabstreifer ungewöhnlich hohe Reinigungsleistung erzielt.

Bei Anwendung einer geeigneten Geometrie auf das erfindungsgemäße Abstreifelement ist, wie noch erläutert wird, nach dem Einbau der Abstreifvorrichtung bis zum endgültigen Verschleiß der Abstreiflamellen keine Nachstellung erforderlich, d.h. die Andruckkraft der Abstreiflamelle am Gurtband bleibt nahezu konstant Damit wird die erfindungsgemäße Abstreifvorrichtung weitgehend wartungsfrei.

Zusätzlich zu einer relativ hohen und gleichmäßigen Abstreifleistung zeichnet sich die erfindungsgemäße Abstreifvorrichtung durch eine größtmögliche Gurtbandschonung aus, weil die Abstreiflamellen Gurtschäden oder dergleichen durch das Zusammenwirken der beiden federbelasteten Drehgelenke leicht ausweichen können. Aus diesem Grund läßt die Erfindung auch den Einsatz von Abstreiflamellen aus hochverschleißfestem Material wie Hartstahl, Keramik oder dergleichen mit entsprechender Formbeständigkeit und - über die Breite des Gurtbandes gesehen - gleichmäßiger sowie gleichbleibender Abstreifleistung zu.

Die mit dem unteren Drehgelenk auf die Lamellenstütze wirkende Federvorrichtung kann eine mechanische Feder z. B. eine Zug- oder Druckfeder oder auch eine hydraulische Federvorrichtung oder dergleichen sein. Nach einer Weiterbildung der Erfindung wird eine Drehfeder bevorzugt, die jeweils sowohl dem unteren als auch dem oberen Drehgelenk oder nur einem von beiden zugeordnet ist (Anspruch 2).

Zweckmäßig ist das obere und/oder das untere Drehgelenk als Drehfederlager insbesondere als Gummitorsionsfederlager ausgebildet (Anspruch 3), weil sich diese Zusammenfassung von Drehgelenk und Drehfeder wegen der Robustheit und Lebensdauer solcher Drehfederlager sowie wegen ihrer kompakten Bauweise an Abstreifvorrichtungen für Gurtbänder bewährt hat

Für erfindungsgemäße Abstreifelemente werden Drehfederlager mit einem relativ großen Auslenkwinkel sowohl für das obere als auch für das untere Drehgelenk bevorzugt. Denn das obere Drehgelenk soll möglichst gurtnah angeordnet sein, damit die Schwenkbewegung der Abstreiflamelle möglichst geringen Massenträgheitsmomenten unterliegt. Auch für das untere Drehgelenk ist ein möglichst großer Auslenkwinkel der Drehfeder vorzuziehen.

Um bei dem bewährten Prinzip der Verwendung von Drehfederlagern zu bleiben und dennoch einen möglichst großen Auslenkwinkel zu erreichen, ist nach einer erfindungsgemäßen Weiterbildung vorgesehen, daß das Drehfederlager, das aus einem Innenvierkant und einem innen entsprechend vierkantigen Gehäuse mit aus Gummi oder dergleichen bestehenden Federelementen in den vier von dem Innenvierkant und dem Gehäuse gebildeten Eckbereichen besteht, zur Vergrößerung des maximalen Auslenkwinkels aus mindestens zwei in Reihe federwirksam verbundenen Einzeldrehfedern gebildet ist, so daß der insgesamt resultierende Auslenkwinkel des Drehfederlagers der Summe der Auslenkwinkel der Einzeldrehfedern entspricht (Anspruch 4).

Eine besondere Eignung für die Verwendung an der erfindungsgemäßen Abstreifvorrichtung besitzt ein Drehfederlager, bei dem aus drei Einzeldrehfedern, die nebeneinander auf einem durchgehenden Innenvierkant mit getrennten Gehäusen und Federelementen ausgebildet sind, eine Doppelfeder, nämlich eine Drehfeder mit verdoppeltem Auslenkwinkel hergestellt ist, wobei die beiden seitlichen Gehäuse verdrehfest miteinander verbunden sind und ein Ende der Doppelfeder bilden, während das mittlere Gehäuse das andere Ende der Doppelfeder ist (Anspruch 5).

Die vorgenannte Doppelfeder wird an der erfindungsgemäßen Abstreifvorrichtung vorzugsweise so aufgebaut und verwendet, daß ein Arm der Lamellenstütze, mit dem eine Verbindung zwischen dem unteren und dem oberen Drehfederlager hergestellt wird, mit seinem oberen Ende an dem mittleren Gehäuse des als Doppelfeder ausgebildeten oberen Drehfederlagers und mit seinem unteren Ende an dem mittleren Gehäuse des als Doppelfeder ausgebildeten unteren Drehfederlagers befestigt ist, während die beiden seitlichen Gehäuse jeweils gemeinsam an einer Lamellenplatte (oberes Drehlager) und an einem Fuß (unteres Drehlager) des Abstreifelements befestigt sind (Anspruch 6). Es wird jedoch ausdrücklich darauf hingewiesen, daß diese Anordnung austauschbar ist, nämlich der Arm der Lamellenstütze - je nach den konstruktiven Erfordernissen - auch oben und/oder unten an die seitlichen Gehäuse der Drehfeder angeschlossen sein kann.

Ein solches Drehfederlager läßt sich wahlweise für das untere und/oder obere Drehfederlager verwenden und konstruktiv problemlos einbauen, wobei die Vorteile der an sich bekannten Gummitorsionsfeder benutzt werden, jedoch wegen der Ausbildung als Doppelfeder eine Verdoppelung des maximalen Federweges erreicht wird. Auf diese Weise steht für die Drehfederlager ein doppelt so großer Auslenkwinkel zur Verfügung. Die Doppelfeder hat darüber hinaus den Vorteil, daß die Federkraftänderung pro Auslenkwinkeleinheit geringer ist, als wenn die maximale Federkraft bereits in einem relativ geringen Auslenkwinkelbereich wirksam wird und die Federkraftänderungen pro Drehwinkeleinheit entsprechend hoch sind. Daraus ergibt sich für die Funktion des erfindungsgemäßen Abstreifelementes der Vorteil, daß unter allen Umständen eine ausreichende Vorspannung zur Erzeugung der Andruckkraft für die Abstreiflamelle erzielt wird. Vor allem aber ergibt sich eine nahezu konstante Andruckkraft über den Verschleißwinkel, also in dem Auslenkwinkelbereich, den die Lamellenstütze bis zum vollständigen Verschleiß durchläuft.

Vorzugsweise verläuft die Wirklinie der Abstreifkante der Abstreiflamelle in der Abstreifposition der Abstreiflamelle am Gurtband in dem unteren 90°-Sektor zwischen der horizontalen und der vertikalen Mittelebene des Umschlingungsbogens des Gurtbandes an der Trommel - insbesondere jedoch in der sog. 3 Uhr-Position (Anspruch 7).

Die Anordnung der Wirklinie erfolgt somit bevorzugt in dem Bereich, der in Gurtbandlaufrichtung gesehen, unmittelbar hinter der Abwurfstelle für das Fördergut liegt. Auf diese Weise bleibt die Abstreifvorrichtung gut zugänglich, während der Raum unterhalb des Nachbarsektors für andere Zwecke frei bleibt. Darüber hinaus gelangt das vom Gurtband abgestreifte Gut in die Nähe der Sammelstelle für das Fördergut Insgesamt hat sich die Anordnung der Wirklinie in der sog. 3 Uhr-Position in der Praxis bewährt.

Das erfindungsgemäße Prinzip der schälenden Abstreifposition der Abstreiffamelle am Gurtband und des schnellen Wegschwenkens der Abstreiflamelle beim Auftreffen von Hindernissen läßt sich jedoch ohne weiteres im gesamten Winkelbereich des Umschlingungsbogens anwenden, nämlich auch im oberen 90°-Segment und selbst über das untere 90°-Segment hinaus, wenn Bedarf hierfür vorliegt. Dieser weite Bereich läßt zu, daß im Bedarfsfall auch zwei oder mehr Abstreifvorrichtungen hintereinander am Kopf des Gurtbandes angeordnet sind.

Dabei liegt die Drehachse des unteren Drehgelenks vorzugsweise in einer Position auf einem Kreisbogen um die Trommelachse und entsprechend folgend die Position des oberen Drehgelenks auch auf einem solchen Kreisbogen. Dieser liegt als Innenkreis zweckmäßig zwischen dem Gurtbandbogen und dem Außenkreis, den die möglichen Positionen des unteren Drehgelenks beschreiben.

Für die erfindungsgemäß ermöglichte schälende Anordnung der Abstreiflamelle am Gurtband wird nach einer erfindungsgemäßen Weiterbildung bevorzugt, daß der Anstellwinkel der Abstreiflamelle in ihrer schälenden Abstreifposition am Gurtband im Winkelbereich von ca. 40° bis ca. 80° gegenüber der Tangente an den Radius des Umschlingungsbogens des Gurtbandes an der Trommel im Punkt der Wirklinie der Abstreifkante der Abstreiflamelle liegt, insbesondere jedoch ca. 60° beträgt (Anspruch 8). Ein Anstellwinkel in diesem Bereich bewirkt eine hohe Abstreifleistung und läßt gleichzeitig ein schnelles Wegschwenken der Abstreiflamelle zu, wenn ein Gurtschaden oder dergleichen auf die Abstreiflamelle auftrifft.

Insbesondere in der 3 Uhr-Position der Wirklinie der Abstreifkante der Abstreiflamelle, aber auch für tiefer gelegene Positionen der Wirklinie, ist es vorteilhaft, daß die Achse des unteren Drehgelenks auf der Trommelseite der Tangente an den Radius des Umschlingungsbogens des Gurtbandes an der Trommel im Punkt der Wirklinie der Abstreifkante der Abstreiflamelle und die Achse des oberen Drehgelenks auf der der Trommel abgewandten Seite der Tangente liegt (Anspruch 9). Auf diese Weise rückt die Lamellenstütze in einer Lage in die Nähe des Gurtbandes, in der die Lamellenstütze beim Auftreffen eines Hindernisses auf die Abstreiflamelle schnell reagieren und ausweichen kann. Vorzugsweise liegt die Achse des unteren Drehgelenks zu diesem Zweck auf oder dicht an der Tangente **(Anspruch 10).**

Ein relativ langer Arm der Lamellenstütze hat sich für die Funktion des oberen Drehlagers, das ein leichtes Wegschwenken der Abstreiflamelle beim Auftreffen eines Hindernisses zulassen soll, als vorteilhaft erwiesen. Deshalb soll nach einer erfindungsgemäßen Weiterbildung der Abstand zwischen dem oberen und dem unteren Drehgelenk so groß gewählt werden, daß der Winkel für den Vorspannweg der dem unteren Drehlager zugeordneten Federvorrichtung und der Winkel für den Ausweichweg der Lamellenstütze um die untere Drehachse bei auf die Abstreiflamelle auftreffenden Hindernissen zusammen im Bereich von 40-80° liegen, vorzugsweise jedoch zusammen ca. 65° betragen (Anspruch 11).

Bei der Montage der erfindungsgemäßen Abstreifvorrichtung wird zweckmäßig zunächst die Abstreiflamelle in der gewünschten Position gegenüber der Lamellenstütze eingestellt

Deshalb wird erfindungsgemäß bevorzugt, daß die Abstreifposition der Abstreiflamelle mit dem gewünschten Anstellwinkel der Abstreiflamelle an der Lamellenstütze mit entsprechender Vorspannung der zugeordneten Federvorrichtung eingestellt und mittels einer einstellbaren Schraube oder einem Distanzstück oder dergleichen fixiert wird (Anspruch 12).

Bei der Einstellung der gewünschten Lage der Lamellenstütze gegenüber dem Gurtband ist eine entsprechende Einstellung der Lage der Lamellenstütze am Systemträger vorzunehmen. Hierfür wird zweckmäßig die Vorspannung der dem unteren Drehlager zugeordneten Federvorrichtung durch entsprechendes Verschwenken der Lamellenstütze um den notwendigen Vorspannweg und das Fixieren der Lamellenstütze in der vorgespannten Lage z. B. mittels einer insbesondere verstellbaren Schraube oder mittels eines Distanzstücks eingestellt (Anspruch 13). Nach dieser individuellen Einstellung der Lamellenstütze bzw. des Abstreifelements wird der Systemträger an das Gurtband herangeführt, bis die Abstreifkante der Abstreiflamelle ihre vorbestimmte Abstreifposition bzw. Wirklinie erreicht hat Dann kann die Schraube gelöst bzw. zurückgedreht werden, damit die Federkraft auf die Lamellenstütze wirksam und die Abstreiflamelle entsprechend an das Gurtband angedrückt wird.

Alternativ hierzu ist nach einer erfindungsgemäßen Weiterbildung vorgesehen, daß die Anstellung der Abstreiflamellen in die Abstreifposition am Gurtband durch entsprechendes Verschwenken der Lamellenstütze der Abstreifelemente um das untere Drehlager mit Vorspannen der zugeordneten Federvorrichtung durch eine Verstellung des Systemträgers erfolgt (Anspruch 14). Für das Verstellen des Systemträgers kommen eine Reihe verschiedener Systeme in Betracht, die nachstehend erläutert werden.

Zunächst kann die Einstellung und Vorspannung der Lamellenstützen durch eine Verschiebung des Systemträgers erfolgen (Anspruch 15). Der Systemträger wird nach der Verschiebung, also wenn die Lamellenstützen ihre vorbestimmte Lage und damit die Abstreifkanten der Abstreiflamellen ihre Abstreifposition bzw. Wirklinie an dem Gurtband erreicht haben, vorzugsweise fixiert. Es ist auch möglich, die für das Erreichen dieser Lage erforderliche Kraft z. B. mittels Federkraft oder dergleichen fortwirken zu lassen.

Vorteilhaft ist eine Verschiebung des Systemträgers in horizontaler Richtung im Falle einer Wirklinie der Abstreiflamelle insbesondere in einer 3 Uhr-Position (Anspruch 16). Eine Anordnung des Systemträgers unterhalb der Wirklinie der Abstreiflamelle ist für sämtliche Anordnungen unerläßlich.

Nach einer ersten Alternative ist es möglich, daß der Systemträger an beiden Enden unmittelbar in horizontal verschiebbaren Lagern gelagert ist (Anspruch 17). Nach einer zweiten Alternative (Anspruch 18) ist der Systemträger an beiden Enden an biegesteifen Halterungen befestigt, die jeweils in mittig im Bereich bzw. in Höhe der horizontalen Achse der Trommel angeordneten und horizontal verschiebbaren Lagern gehalten sind. Nach einer dritten Alternative (Anspruch 19) ist vorgesehen, daß der Systemträger an beiden Enden an biegesteifen Halterungen befestigt ist, die durch jeweils oberhalb der horizontalen Achse der Trommel an beiden Enden des Systemträgers angeordnete Lager horizontal verschiebbar sind.

Statt einer Verschiebung des Systemträgers zum Einstellen der Abstreifelemente bzw. Lamellenstützen ist auch eine Einstellung durch Verdrehung des Systemträgers möglich. Hierbei wird bevorzugt, daß der Systemträger in dem unterhalb der Wirklinie der Abstreiflamelle liegenden Bereich angeordnet ist und die Verstellung des Systemträgers durch eine Verdrehung oder Verschwenkung desselben erfolgt, indem ein Drehmoment auf den Systemträger selbst oder auf dessen Schwenklagerung wirksam wird (Anspruch 20). Das Drehmoment kann pneumatisch, hydraulisch oder mechanisch mittels Zug-, Druck- oder Torsionsfedern oder durch Gewichtskräfte oder dergleichen erzeugt werden (Anspruch 21).

Nach einer ersten Alternative wird das Drehmoment mit dem Systemträger achsengleich zwischen diesem und den seitlichen Lagern des Systemträgers erzeugt (Anspruch 22). Nach einer zweiten Alternative mit zwei Möglichkeiten wird das Drehmoment in unterhalb oder oberhalb der horizontalen Mittelachse der Trommel und jeweils mit Abstand zu dieser Achse gelegenen Lagern an beiden Enden des Systemträgers erzeugt, und das Drehmoment bewirkt über biegesteife seitliche Halterungen, die den Systemträger tragen, eine Schwenkbewegung desselben (Anspruch 23).

Ausführungsbeispiele der Erfindung werden nachstehend mit Bezug auf die Zeichnungen näher erläutert. In den Zeichnungen zeigen:
- Fig. 1: eine perspektivische Ansicht einer Trommel einer Förderbandanlage mit einem um die Trommel gelegten Gurtband und mit einer Abstreifvorrichtung mit fünf an dem Gurtband anliegenden Abstreifelementen in der sog. 3-Uhr Position des Umschlingungsbogens des Gurtbandes an der Trommel;
- Fig. 2: eine schematische Seitenansicht eines Abschnitts des Umschlingungsbogens des Gurtbandes an der Trommel mit einem Abstreifelement, dessen Abstreiflamelle in der sog. 3-Uhr Position am Kopf des Gurtbandes anliegt;
- Fig. 3: eine ähnliche Seitenansicht des Abstreifelements von Fig. 2 in der Abstreifposition, jedoch zusätzlich mit einer Darstellung der Abstreiflamelle in weggeschwenkter Position nach dem Auftreffen eines fest am Gurtband anhaftenden Hindernisses auf die Abstreiflamelle;
- Fig. 4: eine schematische Seitenansicht der Trommel mit dem Gurtband zur Darstellung möglicher Anordnungen der Abstreifelemente am Trommelumfang:
- Fig. 5: eine ähnliche schematische Seitenansicht eines Abstreifelementes wie in Fig. 2, jedoch jeweils mit Torsionsfedern für ein unteres und für ein oberes Drehgelenk des Abstreifelements, insbesondere zur Verdeutlichung der verwendeten Drehfederlager und der damit erreichbaren großen Auslenkwinkel für die Lamellenstütze des Abstreifelements;
- Fig. 6: eine Vorderansicht des Abstreifelements von Fig. 5 im Schnitt entlang der Linie C-D von Fig. 5;
- Fig. 7: eine ergänzende Schnittansicht zu Fig. 6 zur Verdeutlichung des Aufbaus einer Doppeldrehfeder gemäß einer Weiterbildung der Erfindung;
- Fig. 8: eine Seitenansicht zu Fig. 7 in einer Ruhelage der dargestellten Torsionsfeder;
- Fig. 9: eine Seitenansicht zu Fig. 7 wie in Fig. 8, jedoch mit Verschwenkung des Gehäuses der mittig angeordneten Torsionsfeder und einer teilweisen Verdrehung der Gummitorsionsfederelementanordnung des dargestellten äußeren Gehäuses sowie des durchgehenden Innenvierkants der drei Gehäuse;
- Fig. 10: eine schematische Seitenansicht eines Abstreifelements in der 3-Uhr Position am Kopf des Gurtbandes auf einem Systemträger mit verschiebbarer Verlagerung desselben unterhalb der Trommel;
- Fig. 11: eine ähnliche Seitenansicht wie Fig. 10, jedoch mit Darstellung einer mittig verschiebbaren Verlagerung des Systemträgers über eine biegesteife Halterung sowie mit einer Verschiebeebene unterhalb der horizontalen Trommelmittelebene;
- Fig. 12: eine ähnliche Ansicht wie in Fig. 11, jedoch mit einer Verschiebeebene für den Systemträger oberhalb der horizontalen Trommelmittelebene;
- Fig. 13: eine ähnliche Ansicht wie Fig. 10-12, jedoch mit drehbarer Verlagerung des Systemträgers;
- Fig. 14: eine ähnliche Ansicht wie Fig. 13, jedoch mit einer Drehachse der Verlagerung des Systemträgers unterhalb der horizontalen Mittelebene der Trommel;
- Fig. 15: eine Ansicht wie Fig. 14, jedoch mit einer Drehachse der Verlagerung des Systemträgers oberhalb der horizontalen Mittelebene der Trommel.

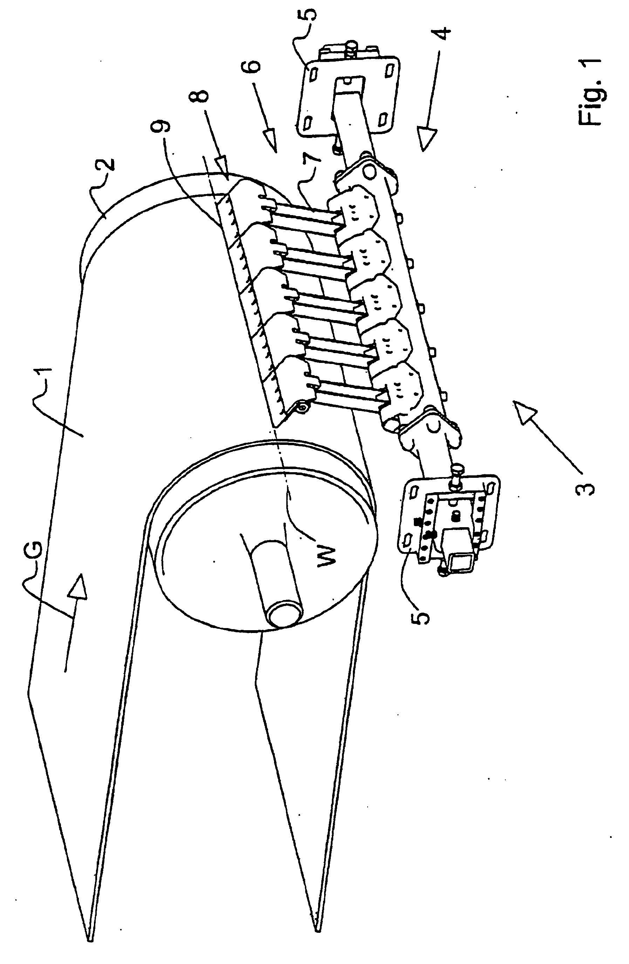

In Fig. 1 ist um eine Trommel 2 - Antriebs- und/oder Umlenktrommel - ein Gurtband 1 gelegt, das in der durch einen Pfeil G angezeigten Gurtbandlaufrichtung um die Trommel 2 umläuft, in diesem Fall mit einem Umschlingungswinkel von ca. 90°. Die Trommel 2 ist in üblicher Weise in einem nicht dargestellten Gestell einer Förderbandanlage drehbar gelagert.

Am Kopf des Gurtbandes 1 ist als Vorabstreifer eine Vorrichtung 3 zum Abstreifen von Verunreinigungen von dem Gurtband 1 angeordnet. Auf einem Systemträget 4, der mittels seitlicher Halterungen 5 an seinen beiden Enden in einem nicht dargestellten Gestell der Förderbandanlage verlagert ist, sind fünf Abstreifelemente 6 in einer Reihe unmittelbar aneinander anschließend angeordnet. Jedes Abstreifelement 6 ist mit einer Lamellenstütze 7 an dem Systemträger 4 gelagert und trägt oben - Angaben wie "oben" oder "horizontal" oder dergleichen betreffen hier und im folgenden grundsätzlich die Gebrauchslage des Abstreifelementes 6 - eine Abstreiflamelle 8, die mit ihrer Abstreilkante 9 in der sog. 3 Uhr-Position längs einer gestrichelt eingezeichneten Wirklinie W im Abstreifbetrieb eng an dem Gurtband 1 anliegt.

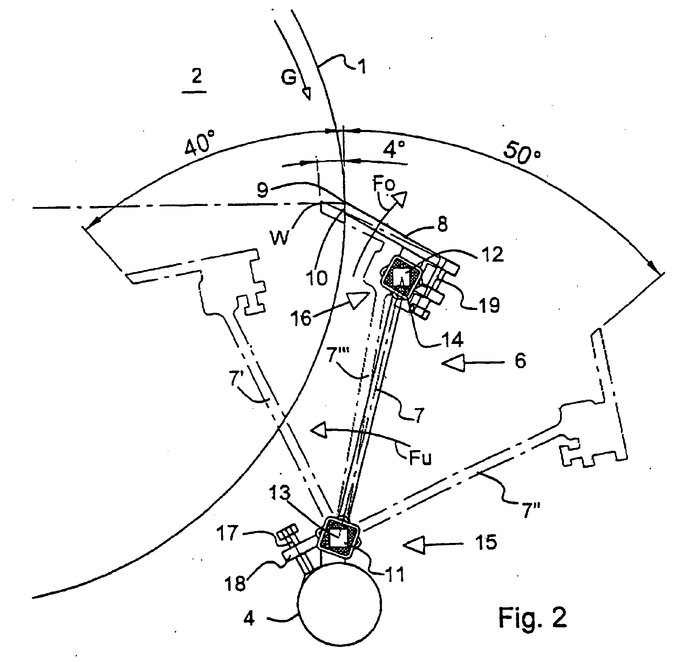

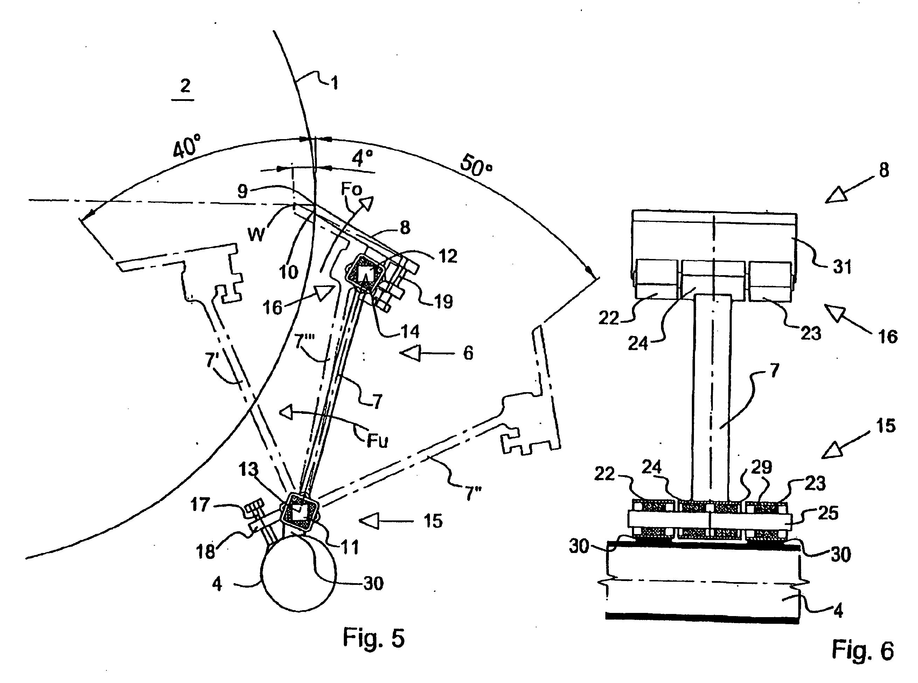

Auch in Fig. 2 liegt die Abstreiflamelle 8 mit ihrer Abstreifkante 9 entlang der Wirklinie W sowie mit ihrer Abstreiffläche 10 eng an dem Gurtband 1 unter einem Winkel von ca. 60° gegenüber der Tangente an den Radius des Umschlingungsbogens des Gurtbandes 1 an der Trommel 2 an. Diese Anlage wird erreicht durch eine Federkraft Fu, mit der die Lamellenstütze 7 um eine horizontale Drehachse 13 eines unteren Drehgelenks 11 die Abstreiflamelle 8 an das Gurtband 1 andrückt. In dem hier gewählten Ausführungsbeispiel besteht das untere Drehgelenk 11 aus einem unteren Drehfederlager 15, dessen Aufbau anhand von Fig. 5-9 noch erläutert wird. Das Drehfederlager 15 ist mit dem Systemträger 4 verbunden.

Zur Erzielung einer Federkraft Fu, mit der die Abstreiflamelle 8 über die Lamellenstütze 7 mit ausreichendem Andruck an das Gurtband 1 angedrückt wird, wird die Lamellenstütze 7 aus der neutralen Lage des unteren Drehfederlagers 15, in der die Lamellenstütze mit 7' gekennzeichnet ist, zum Andrücken der Abstreiflamelle 8 an das Gurtband mm 40° vorgespannt, bis die Lamellenstütze 7 nämlich die in Fig. 2 dargestellte Position an dem unteren Drehfederlager 15 einnimmt und die Federkraft Fu wirksam werden kann, um eine enge Anlage der Abstreiflamelle 8 am Gurtband 1 herbeizuführen und aufrechtzuerhalten. Das Vorspannen des unteren Drehfederlagers 15 wird, wie noch erläutert wird, nach einer ersten Alternative individuell an jedem Abstreifelement 6 in einem Bereich mit Abstand von dem Gurtband 1 vorgenommen. Nach dem Vorspannen des unteren Drehfederlagers 15 wird die Lamellenstütze 7 in dieser Lage fixiert, und der Systemträger 4 kann zum Andrücken der Abstreiflamelle 8 an das Gurtband 1 in die dargestellte Position gebracht werden. Die Fixierung der Lamellenstütze 7 wird nun gelöst, so daß die Federkraft Fu voll wirksam wird und den notwendigen Andruck der Abstreiflamelle 8 herbeiführt. Die dargestellte Abstreifposition bewirkt, daß am Gurtband anhaftende Verunreinigungen von der Abstreiflamelle 8 mit ihrer Abstreifkante 9 abgeschält werden und abgeführt werden können. Nach einer zweiten Alternative wird das Vorspannen der Lamellenstützen 7 der Reihe von Abstreifelementen 6 und das Einstellen der Abstreiflamellen 8 durch Heranführen des Systemträgers 4 mit den Abstreifelementen 6 an das Gurtband 1 und Andrücken derselben mit dem Systemträger 4 an das Gurtband 1 vorgenommen, bis die Abstreiflamellen 8 die Abstreifposition auf der Wirklinie W erreicht haben.

Obwohl Abstreiflamellen 8 aus hochverschleißfestem Material wie Hartmetall, Keramik oder dergleichen eingesetzt werden, unterliegt die Abstreiflamelle 8 im Bereich ihrer Abstreifkante 9 bzw. Abstreiffläche 10 bei hoher Beanspruchung im Laufe der Zeit einem Verschleiß, der einen Abtrag an der Abstreiffläche 10 der Abstreiflamelle 8 verursacht In Folge der hierdurch bewirkten Verkürzung der Abstreiflamelle 8 verändert sich der Verdrehwinkel der Lamellenstütze 7 geringfügig und erreicht schließlich die mit 7'" gekennzeichnete Position, die sich um 4° von dem ursprünglichen Vorspannwinkel unterscheidet. Der maximale Verschleißweg bzw. Verschleißwinkel der Lamellenstütze 7 wird durch eine am Systemträger 4 angebrachte Begrenzungsschraube 17 mit einem Anschlag 18 begrenzt. Die Federkraft Fu läßt dabei wegen der nur sehr geringen Verdrehwinkeländerung nur wenig nach und bleibt weitgehend konstant Dieser Vorteil erklärt sich aus der dargestellten Geometrie und aus der Art des unteren Drehfederlagers 15, wie noch erläutert wird.

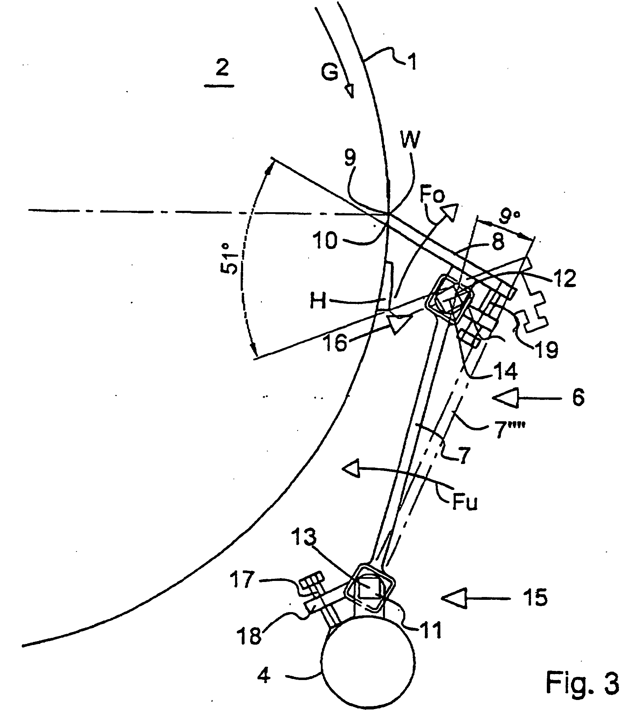

Das Abstreifelement 6 kann, wie anhand von Fig. 3 erläutert wird, jedoch auch eine Ausweichdrehbewegung im Uhrzeigersinn ausführen, die ohne weiteres, wie in Fig. 2 eingezeichnet, einen Verdrehwinkel von 50° betragen kann und zu einer entsprechenden Zunahme der Federkraft Fu führt, wenn in dieser Situation die Lamellenstütze 7 die mit 7" gekennzeichnete Position in Fig. 2 einnimmt. Eine solche Situation kann eintreten, wenn ein fest am Gurtband 1 anhaftendes Hindernis H auf die Abstreiflamelle 8 auftritt, wie z. B. ein Gurtschaden oder dergleichen.

Fig. 2 und 3 zeigen, daß die Abstreiflamelle 8 am oberen Ende der Lamellenstütze 7 über ein oberes federbelastetes Drehgelenk 12 mit einer horizontalen Drehachse 14 angebracht ist Für das vorliegende Ausführungsbeispiel wurde für das federbelastete obere Drehgelenk 12 ein Drehfederlager 16 von ähnlicher Art gewählt wie für das untere Drehfederlager 15. Die Drehfeder des oberen Drehfederlagers 16 wird vorgespannt, so daß sich, wie eingezeichnet, eine im Uhrzeigersinn sowie gegensinnig zur unteren Federkraft Fu gerichtete obere Federkraft Fo ergibt, die mit einer Einstellschraube 19 fixiert wird, um die Abstreiflamelle 8 in der dargestellten Abstreifposition zu halten.

Wenn ein fest an dem Gurtband 1 anhaftendes Hindernis H (vgl. Fig. 3) z. B. ein sog. Gurtschaden oder dergleichen auf die Abstreiflamelle 8 auftrifft, treten beide federbelasteten Drehgelenke 11, 12 in Funktion und lösen die Abstreiflamelle 8 für Bruchteile einer Sekunde vom Gurtband 1, so daß das Hindernis H an der Abstreiflamelle 8 vorbeilaufen kann, wie nachstehend erläutert wird.

Die Abstreiflamelle 8 wird an ihrer Abstreifkante 9 von dem Hindernis H erfaßt und mitgenommen. Dabei wird sie um die Drehachse 14 des oberen Drehfederlagers 16 entgegen dem Uhrzeigersinn verschwenkt, wobei die Federkraft Fo und damit die Rückstellkraft der vorgespannten Torsionsfeder des oberen Drehfederlagers 16 noch zunimmt. Dieser Schwenkbewegung der Abstreiflamelle 8 überlagert sich eine gegensinnige Schwenkbewegung der Lamellenstütze 7 um das untere Drehfederlager 15 durch die von der Abstreiflamelle 8 übertragenen Reaktionskräfte des Gurtbandes 1. Dabei nimmt die Federspannung des unteren Drehfederlagers 15 weiter zu, so daß auch hier die Rückstellkraft wächst. Spätestens dann, wenn während dieser gegensinnigen Schwenkbewegungen der Lamellenstütze 7 und der Abstreiflamelle 8 der Abstand der oberen Drehachse 14 von dem Gurtband 1 so groß wird wie der Abstand zwischen der oberen Drehachse 14 und der Abstreifkante 9 - zusätzlich ist das Maß des Hindernisses H zu berücksichtigen -, kann sich die Abstreiflamelle, wie in Fig. 3 dargestellt ist, von dem Hindernis H lösen und das Hindernis H kann unter der Abstreiflamelle 8 durchlaufen. Im vorliegenden Ausführungsbeispiel kann das Hindernis H spätestens dann durchlaufen, wenn die Abstreiflamelle 8 einen Schwenkwinkel von 51° entgegen der oberen Federkraft Fo zurückgelegt hat und die gegensinnige Ausweichschwenkbewegung der Lamellenstütze 7 einen Schwenkwinkel von 9° erreicht hat und in der mit 7"" gekennzeichneten Position steht.

In der Beschreibungseinleitung wurde bereits darauf hingewiesen, daß die Ausweichbewegung und ebenso die Rückkehr der Abstreiffamelle 8 in die Abstreifposition um so schneller erfolgt, je geringer die Masse der Bauteile am Kopf der Lamellenstütze 7 ist. Es wird angestrebt, daß die Rückkehr der Abstreiflamelle 8 in ihre Anstellwinkelposition bereits erfolgt ist, bevor die Rückkehr der Lamellenstütze 7 erfolgt ist Auf diese Weise kann die Rückkehr der Abstreiflamelle 8 in ihre betriebsbereite Lage an der Lamellenstütze 7 so erfolgen, daß die Abstreiflamelle 8 nicht zunächst mit der Abstreifkante 9 sondern gleich wieder mit ihrer Abstreiffläche 10 auf dem Gurtband 1 aufsetzt. Damit wird eine größtmögliche Gurtschonung und ebenso eine größtmögliche Verkürzung der Unterbrechung des Abstreifbetriebs erreicht.

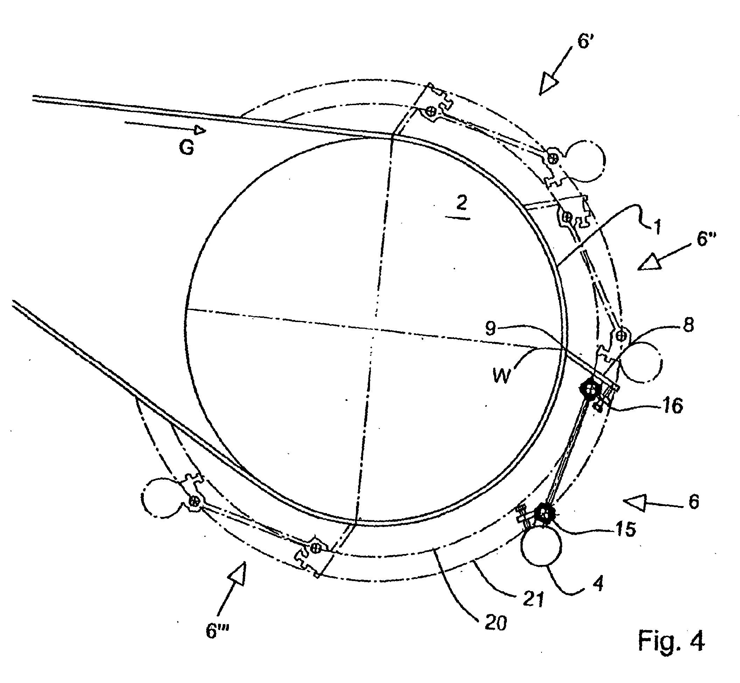

In Fig. 4 sind mögliche Anordnungen einer erfindungsgemäßen Abstreifvorrichtung am Trommelumfang dargestellt Dabei zeigt sich, daß die vorstehend beschriebene Wirkungsweise einer erfindungsgemäßen Abstreifvorrichtung keineswegs etwa auf die als Beispiel gewählte 3 Uhr-Position der Abstreiflamelle 8 am Gurtband 1 beschränkt ist, sondern daß für die Abstreifposition der Abstreiflamelle 8 ohne weiteres die Bogenabschnitte sowohl des oberen als auch des unteren 90°-Segments des Umschlingungsbogens des Gurtbandes 1 in Betracht kommen, und daß sogar eine über das untere 90°-Segment hinausgehende Möglichkeit für die Abstreifposition der Abstreiflamelle 8 besteht, wenn der Umschlingungsbogen des Gurtbandes 1 größer als 90° ist und Bedarf für eine so weit zurückgezogene Abstreifposition der Abstreifvorrichtung besteht Dieser weite Winkelbereich für mögliche Abstreifpositionen läßt zu, daß im Bedarfsfall auch zwei oder mehr Abstreifvorrichtungen hintereinander am Kopf des Gurtbandes 1 angeordnet sind, wie Fig. 4 durch Darstellung von drei weiteren Abstreifvorrichtungen in verschiedenen Positionen am Trommelumfang verdeutlicht, die mit 6', 6" und 6'" gekennzeichnet sowie mit strichpunktierten Linien dargestellt sind. Dabei liegt die Drehachse des unteren Drehfederlagers 15 jeweils auf einem äußeren Kreisbogen 21 und die Drehachse des oberen Drehfederlagers 16 auf einem inneren Kreisbogen 20 um die Trommelachse.

In den Fig. 5-9 ist für die Drehfederlager 15, 16 ein Ausführungsbeispiel eines neuen Drehfederlagerprinzips dargestellt, das im folgenden im Hinblick auf das untere Drehfederlager 15 erläutert wird.

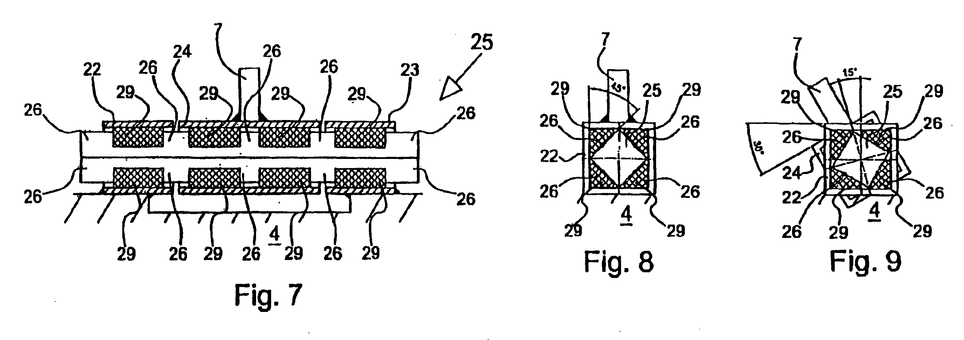

Aus Fig. 6 in Verbindung mit den Fig. 7-9 ergibt sich, daß zur Bildung einer sog. Doppeldrehfeder jeweils ein linkes seitliches Gehäuse 22 und ein rechtes seitliches Gehäuse 23 jeweils mit einem quadratischen Innenvierkantquerschnitt (auf die Außengestaltung der Gehäuse kommt es nicht an) über eine Befestigung 30 fest mit dem Systemträger 4 (in Fig. 7-9 rein schematisch angedeutet) fest verbunden sind. Zwischen den beiden seitlichen Gehäusen 22, 23 befindet sich in Flucht mit diesen ein mittleres Gehäuse 24 mit insbesondere innen gleichem Querschnitt wie die seitlichen Gehäuse 22, 23. Durch die drei Gehäuse 22, 23, 24 erstreckt sich ein Innenvierkant 25. Zwischen den vier Seitenflächen 26 des Innenvierkants 25 und den Innenflächen der Gehäuse 22, 23, 24 sind, wie die Zeichnungen zeigen, jeweils vier Federelemente 29, vorzugsweise aus Gummi bestehend, unter Druck angeordnet. In dem mittleren Gehäuse 24 befinden sich zwei Gruppen aus je vier Federelementen 29 nebeneinander, so daß die Gesamtanordnung vier Gruppen umfaßt.

Gummitorsionsfederelemente mit einem Innenvierkant und einem mindestens innen vierkantig ausgebildeten Gehäuse und mit Gummifederelementen in den Eckbereichen sind bekannt, insbesondere auch in Verwendung an Abstreifvorrichtungen für Gurtbänder. Aber die dargestellte und beschriebene Anordnung und Verbindung der beiden seitlichen Gehäuse 22, 23 und getrennt hiervon des mittleren Gehäuses 24 gemeinsam auf dem Innenvierkant 25 führt zu einem Drehfederlager 15, bei dem die beiden äußeren Drehfedern in den seitlichen Gehäusen 22, 23 im vorliegenden Fall über den Systemträger 4 fest miteinander verbunden sind, während die mittlere Drehfeder im mittleren Gehäuse 24 gegenüber den seitlichen Gehäusen 22, 23 frei drehbar ist. Dadurch, daß der Innenvierkant 25 nicht verlagert, sondern frei schwimmend und nur durch die Federelemente 29 gehalten wird, kann sich der Innenvierkant 25 relativ zu allen drei Gehäusen drehen. Wenn beispielsweise die in Fig. 7 nur schematisch dargestellte Lamellenstütze 7, die außen an dem mittleren Gehäuse 24 befestigt ist (vgl. auch Fig. 6) um 30° gedreht wird, dreht sich der Innenvierkant 25 nur um 15°. Auch die Vorspannung der Drehfeder entspricht einer Vorspannung von 15°. Durch die gezeigte Anordnung verdoppelt sich folglich der Winkelweg der Lamellenstütze 7 gegenüber der Drehfederauslenkung, wie in der Darstellung von Fig. 9 deutlich wird. Eine entsprechende Winkelverdrehung gegeneinander zeigen die seitlichen Gehäuse 23 gegenüber dem mittleren Gehäuse 24 in der vorgespannten Stellung der Lamellenstütze 7 von Fig. 5.

Aus Fig. 5 und 6 geht hervor, daß die Ausbildung des unteren Drehfederlagers 15 und des oberen Drehfederlagers 16 - zwischen beiden ist die Lamellenstütze 7 befestigt - vom Aufbau und von der Wirkungsweise her gleich ist In beiden Fällen werden durch die Doppelfederausbildung entsprechend große Auslenkwinkel ermöglicht Wie auch aus Fig. 17 hervorgeht, sind die beiden seitlichen Gehäuse 22, 23 fest mit einer Lamellenplatte 31 und damit auch untereinander fest verbunden, während das frei drehbare mittlere Gehäuse 24 der mittleren Drehfeder fest mit der Lamellenstütze 7 verbunden ist.

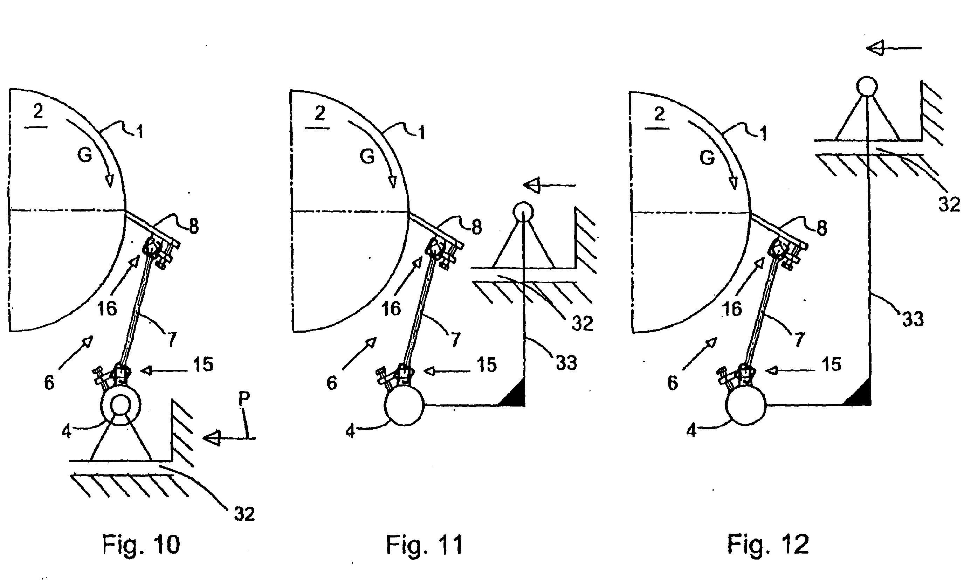

Für die Montage des Systemträgers 4 am Gerüst der Förderbandanlage und für die Einstellung der auf dem Systemträger 4 gelagerten Abstreifelemente 6 am Gurtband 1 gibt es verschiedene Möglichkeiten, die anhand der Darstellungen von Fig. 10-15 in Verbindung mit Fig. 1-3 erläutert werden und rein beispielhaft zu verstehen sind.

Zunächst wird die Abstreiflamelle 8 in die gewünschte Abstreifposition durch Verdrehen und Vorspannen des oberen Drehfederlagers 16 eingestellt und in dieser Lage fixiert (individuelle Einstellung).

Anschließend wird die gewünschte Lage der Lamellenstütze 7 gegenüber dem Gurtband 1 vorgenommen. Hierfür wird das untere Drehfederlager 15 durch entsprechendes Verschwenken der Lamellenstütze 7 um den notwendigen Vorspannweg (vgl. Fig. 2 und 5) und durch Fixieren der Lamellenstütze 7 in der vorgespannten Lage z.B. mittels einer verstellbaren Schraube oder mittels eines Distanzstücks eingestellt bzw. vorbereitet. Nach dieser Einstellung der Lamellenstütze 7 wird der Systemträger 4 an das Gurtband 1 herangeführt, bis die Abstreifkante 9 der Abstreiflamelle 8 ihre vorbestimmte Abstreifposition bzw. Wirklinie W erreicht hat. Dann kann die Schraube gelöst bzw. zurückgedreht werden, damit die Federkraft der Lamellenstütze 7 wirksam und die Abstreiflamelle 8 an das Gurtband 1 angedrückt wird, z. B. in der 3 Uhr-Position, wie in den Ausführungsbeispielen dargestellt ist.

Anstelle der individuellen Vorspannung der Lamellenstütze 7 bzw. des unteren Drehfederlagers 15 kann nach der schon früher genannten zweiten Alternative diese Einstellung auch für die gesamte Reihe der Abstreifelemente 6 gemeinsam durch Heranführen und Andrükken mittels des Systemträgers 4 an das Gurtband 1 vorgenommen werden.

Das Heranführen des Systemträgers 4 an die Trommel 2 zum Andrücken der Abstreiflamellen 8 der Abstreifelemente 6 auf dem Systemträger läßt sich auf verschiedene Weise durchführen. So kann die Anstellung der Abstreiflamellen 8 der Abstreifelemente 6 durch eine Verschiebung des Systemträgers 4 mit einer horizontalen verschiebbaren Verlagerung 32 in Richtung eines Pfeils P unterhalb der Trommel 2 durchgeführt werden, wie in Fig. 10 dargestellt ist. Fig. 11 zeigt, daß eine mittige Verlagerung des Systemträgers 4 zum Anstellen der Abstreiflamellen 8 in der 3 Uhr-Position auch mittels einer biegesteifen Halterung 33 möglich ist. Dabei kann die horizontale Ebene der Lager 32 auch oberhalb der horizontalen Achse 34 der Trommel 2 liegen, wie Fig. 12 zeigt.

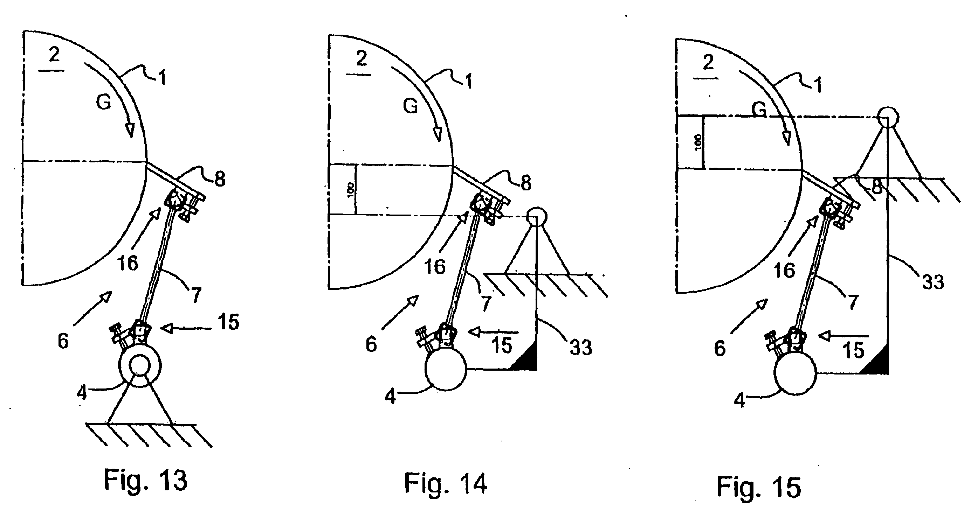

Beispiele einer drehbaren Verlagerung des Systemträgers 4 zum Anstellen und Andrücken der Abstreiflamellen 8 der Lamellenstützen 7 des Systemträgers 4 sind jeweils in der 3 Uhr-Position der schälend angestellten Abstreiflamellen 8 in Fig. 13-15 dargestellt. In Fig. 13 ist der Systemträger 4 in einem Bereich unterhalb der Trommel 2 angeordnet, wobei der Systemträger 4 durch eine Verdrehung oder Verschwenkung wirksam wird, indem ein Drehmoment auf den Systemträger 4 selbst pneumatisch, hydraulisch oder mechanisch mittels Zug-, Druck- oder Torsionsfedern oder durch Gewichtskräfte oder dergleichen aufgebracht wird. In Fig. 14 wird nach einer ersten Alternative ein Drehmoment unterhalb der horizontalen Mittelachse der Trommel 2 und in Fig. 15 oberhalb der horizontalen Mittelachse der Trommel 2 jeweils mit Abstand zu dieser Achse gelegenen Lagern an beiden Enden des Systemträgers 4 wirksam. Das Drehmoment bewirkt in beiden Fällen über biegesteife seitliche Halterungen 33, die den Systemträger 4 tragen, eine Schwenkbewegung desselben.

## Patentansprüche

1. Vorrichtung zum Abstreifen von Verunreinigungen von Gurtbändern in Förderbandanlagen im Bereich einer Antriebs- und/oder Umlenktrommel des Gurtbandes
- mit einem an einem Gurtbandtraggerüst zu befestigenden Systemträger,
- an dem zumindest ein Abstreifelement angeordnet ist,
- wobei das Abstreifelement eine an einer Lamellenstütze angebrachte Abstreiflamelle aufweist,
- die in der Abstreifposition schälend an dem Gurtband anliegt,
- und wobei das Abstreifelement ein mit der Lamellenstütze verbundenes unteres Drehgelenk mit horizontaler Drehachse -Angaben wie "horizontal" oder dergleichen betreffen hier und im folgenden grundsätzlich die Gebrauchslage des Abstreifelementes-
- sowie eine zum Andrücken der Abstreiflamelle an das Gurtband auf die Lamellenstütze wirkende Federvorrichtung in derartiger Ausbildung und Anordnung aufweist,
- daß die Lamellenstütze in der Abstreifposition der Abstreiflamelle federbelastet um die horizontale Drehachse geschwenkt ist
- und beim Auftreffen von fest am Gurtband anhaftenden Hindernissen auf die Abstreiflamelle leicht wegschwenken und wieder in die betriebsbereite Lage am Gurtband zurückschwenken kann,
**dadurch gekennzeichnet, daß**
- die Abstreiflamelle (8) an der Lamellenstütze (7) durch ein oberes Drehgelenk (12) mit horizontaler Drehachse (14) schwenkbar gelagert und
- durch eine obere Federvorrichtung unter Federvorspannung gehalten ist, deren Federwirkung - bezogen auf das untere Drehgelenk (11) und dessen Federvorrichtung - gegensinnig ist.

2. Vorrichtung nach Anspruch 1, **dadurch gekennzeichnet, daß** die mit dem unteren Drehgelenk (11) auf die Lamellenstütze (7) wirkende Federvorrichtung und/oder die mit dem oberen Drehgelenk (12) auf die Abstreiflamelle (8) wirkende Federvorrichtung eine Drehfeder ist.

3. Vorrichtung nach Anspruch 1 oder 2, **dadurch gekennzeichnet, daß** das obere und/oder das untere Drehgelenk (12, 11) als Drehfederlager (15, 16) insbesondere als Gummitorsionsfederlager ausgebildet ist.

4. Vorrichtung nach Anspruch 2 oder 3, **dadurch gekennzeichnet, daß** das Drehfederlager (15, 16), das aus einem Innenvierkant (25) und einem innen entsprechend vierkantigen Gehäuse (22, 23, 24) mit aus Gummi oder dergleichen bestehenden Federelementen (29) in den vier von dem Innenvierkant (25) und dem Gehäuse (22, 23, 24) gebildeten Eckbereichen gebildet ist, zur Vergrößerung des maximalen Auslenkwinkels aus mindestens zwei in Reihe federwirksam verbundenen Einzeldrehfedern besteht, so daß der insgesamt resultierende Auslenkwinkel des Drehfederlagers (15, 16) der Summe der Auslenkwinkel der Einzeldrehfedern entspricht.

5. Vorrichtung nach Anspruch 4, **dadurch gekennzeichnet, daß** aus drei Einzeldrehfedern, die nebeneinander auf einem durchgehenden Innenvierkant (25) mit getrennten Gehäusen (22, 23, 24) und Federelementen (29) ausgebildet sind, eine Doppelfeder, nämlich eine Drehfeder mit verdoppeltem Auslenkwinkel hergestellt ist, wobei die beiden seitlichen Gehäuse (22, 23) verdrehfest miteinander verbunden sind und ein Ende der Doppelfeder bilden, während das mittlere Gehäuse (24) das andere Ende der Doppelfeder ist.

6. Vorrichtung nach Anspruch 5, **dadurch gekennzeichnet, daß** ein Arm der Lamellenstütze (7), mit dem eine Verbindung zwischen dem unteren und dem oberen Drehfederlager (15, 16) hergestellt wird, mit seinem oberen Ende an dem mittleren Gehäuse (24) des als Doppelfeder ausgebildeten oberen Drehfederlagers (16) und/oder mit seinem unteren Ende an dem mittleren Gehäuse (24) des als Doppelfeder ausgebildeten unteren Drehfederlagers (15) befestigt ist, während die beiden seitlichen Gehäuse (22, 23) jeweils gemeinsam an einer Lamellenplatte (31) (oberes Drehlager (16)) und an einem Fuß (unteres Drehlager (15)) des Abstreifelements (6) befestigt sind.

7. Vorrichtung nach einem der vorhergehenden Ansprüche, **dadurch gekennzeichnet, daß** die Wirklinie (W) der Abstreifkante (9) der Abstreiflamelle (8) in der Abstreifposition der Abstreiflamelle (8) am Gurtband (1) in dem unteren 90°-Sektor zwischen der horizontalen und der vertikalen Mittelebene des Umschlingungsbogens des Gurtbandes (1) an der Trommel (2) - insbesondere jedoch in der sog. 3 Uhr-Position - verläuft.

8. Vorrichtung nach einem der vorhergehenden Ansprüche, **dadurch gekennzeichnet, daß** der Anstellwinkel der Abstreiflamelle (8) in ihrer schälenden Abstreifposition am Gurtband (1) im Winkelbereich von ca. 40° bis ca. 80° gegenüber der Tangente an den Radius des Umschlingungsbogens des Gurtbandes (1) an der Trommel (2) im Punkt der Wirklinie (W) der Abstreifkante (9) der Abstreiflamelle (8) liegt, insbesondere jedoch ca. 60° beträgt.

9. Vorrichtung nach einem der vorhergehenden Ansprüche, **dadurch gekennzeichnet, daß** die Achse (13) des unteren Drehgelenks (11) auf der Trommelseite der Tangente an den Radius des Umschlingungsbogens des Gurtbandes (1) an der Trommel (2) im Punkt der Wirklinie (W) der Abstreifkante (9) der Abstreiflamelle (8) und die Achse (14) des oberen Drehgelenks (12) auf der der Trommel (2) abgewandten Seite der Tangente liegt.

10. Vorrichtung nach Anspruch 9, **dadurch gekennzeichnet, daß** die Achse (13) des unteren Drehgelenks (11) auf oder dicht an der Tangente liegt.

11. Vorrichtung nach einem der vorhergehenden Ansprüche, **dadurch gekennzeichnet, daß** der Abstand zwischen dem oberen und dem unteren Drehgelenk (12, 11) so groß gewählt wird, daß der Winkel für den Vorspannweg der dem unteren Drehlager (15) zugeordneten Federvorrichtung und der Winkel für den Ausweichweg der Lamellenstütze (7) um die untere Drehachse (13) bei auf die Abstreiflamelle (8) auftreffenden Hindernissen (H) zusammen im Bereich von 40-80° liegen, vorzugsweise jedoch zusammen ca. 65° betragen.

12. Vorrichtung nach einem der vorhergehenden Ansprüche, **dadurch gekennzeichnet, daß** die Abstreifposition der Abstreiflamelle (8) mit dem gewünschten Anstellwinkel der Abstreiflamelle (8) an der Lamellenstütze (7) mit entsprechender Vorspannung der zugeordneten Federvorrichtung eingestellt und mittels einer einstellbaren Schraube (19) oder einem Distanzstück oder dergleichen fixiert wird.

13. Vorrichtung nach einem der vorhergehenden Ansprüche, **dadurch gekennzeichnet, daß** die Vorspannung der dem unteren Drehlager (15) zugeordneten Federvorrichtung durch entsprechendes Verschwenken der Lamellenstütze (7) um den notwendigen Vorspannweg und das Fixieren der Lamellenstütze (7) in der vorgespannten Lage z. B. mittels einer insbesondere verstellbaren Schraube (17) oder mittels eines Distanzstücks eingestellt wird.

14. Vorrichtung nach einem der vorhergehenden Ansprüche, **dadurch gekennzeichnet, daß** die Anstellung der Abstreiflamellen (8) in die Abstreifposition am Gurtband (1) durch entsprechendes Verschwenken der Lamellenstütze (7) der Abstreifelemente (6) um das untere Drehlager (15) mit Vorspannen der zugeordneten Federvorrichtung durch eine Verstellung des Systemträgers (4) erfolgt.

15. Vorrichtung nach Anspruch 14, **dadurch gekennzeichnet, daß** die Einstellung und Vorspannung der Lamellenstützen (7) durch eine Verschiebung des Systemträgers (4) erfolgt.

16. Vorrichtung nach Anspruch 15, **gekennzeichnet durch** eine Verschiebung des Systemträgers (4) in horizontaler Richtung im Falle einer Wirklinie (W) der Abstreiflamelle (8) insbesondere in einer 3 Uhr-Position.

17. Vorrichtung nach einem der Ansprüche 14-16, **dadurch gekennzeichnet, daß** der Systemträger (4) an beiden Enden unmittelbar in horizontal verschiebbaren Lagern gelagert ist.

18. Vorrichtung nach einem der Ansprüche 14-16, **dadurch gekennzeichnet, daß** der Systemträger an beiden Enden an biegesteifen Halterungen (33) befestigt ist, die jeweils in mittig im Bereich bzw. in Höhe der horizontalen Achse der Trommel (2) an beiden Enden des Systemträgers (4) angeordneten und horizontal verschiebbaren Lagern (32) gehalten sind.

19. Vorrichtung nach einem der Ansprüche 14-16, **dadurch gekennzeichnet, daß** der Systemträger (4) an beiden Enden an biegesteifen Halterungen (33) befestigt ist, die durch jeweils oberhalb der horizontalen Achse der Trommel (2) angeordnete Lager (32) horizontal verschiebbar sind.

20. Vorrichtung nach Anspruch 14, **dadurch gekennzeichnet, daß** der Systemträger (4) in dem unterhalb der Wirklinie (W) der Abstreiflamelle (8) liegenden Bereich angeordnet ist und die Verstellung des Systemträgers (4) durch eine Verdrehung oder Verschwenkung desselben erfolgt, indem ein Drehmoment auf den Systemträger (4) selbst oder auf dessen Schwenklagerung wirksam wird.

21. Vorrichtung nach Anspruch 20, **dadurch gekennzeichnet, daß** das Drehmoment pneumatisch, hydraulisch oder mechanisch mittels Zug-, Druck- oder Torsionsfedern oder durch Gewichtskräfte oder dergleichen erzeugt wird.

22. Vorrichtung nach einem der Ansprüche 14 sowie 20-21, **dadurch gekennzeichnet, daß** das Drehmoment mit dem Systemträger (4) achsengleich zwischen diesem und den seitlichen Lagern des Systemträgers (4) erzeugt wird.

23. Vorrichtung nach einem der Ansprüche 14 sowie 20-21, **dadurch gekennzeichnet, daß** das Drehmoment in unterhalb oder oberhalb der horizontalen Mittelachse der Trommel (2) und jeweils mit Abstand zu dieser Achse gelegenen Lagern an beiden Enden des Systemträgers (4) erzeugt wird, und das Drehmoment über biegesteife seitliche Halterungen (33), die den Systemträger (4) tragen, eine Schwenkbewegung des Systemträgers (4) bewirkt.

## Claims

1. An apparatus for stripping dirt off belts in conveyor belt assemblies in the area of a drive and/or head pulley of the belt
- comprising a system carrier to be attached to a belt carrier frame,
- at which at least one stripping element is arranged,
- the stripping element having a stripping lamella mounted on a lamella holder,
- the stripping lamella contacting the belt in a peeling position,
- and wherein the stripping element has a bottom swivel mount coupled to the lamella holder and having a horizontal swivel axis - indications such as "horizontal" or the like here and in the following principally refer to the position of use of the stripping element -
- as well as a spring means acting to press the stripping lamella on the lamella holder against the belt in such a form and arrangement
- that the lamella holder in the stripping position of the stripping lamella is swivelled about the horizontal swivel axis in a spring loaded fashion,
- and when obstructions solidly adhering to the belt impact on the stripping lamella, the lamella holder may be easily deflected and returned back to the working position on the belt,
**characterized in that**
- the stripping lamella (8) is swivel mounted at the lamella holder (7) by a top swivel mount (12) having a horizontal swivel axis (14) and
- is held by a top spring means in a spring biased fashion whose spring action
- with respect to the bottom swivel mount (11) and its spring means - is in the counter sense.

2. The apparatus according to claim 1, **characterized in that** the spring means acting on the lamella holder (7) via the bottom swivel mount (11) and/or acting on the stripping lamella (8) via the top swivel mount (12) is a torsion spring.

3. The apparatus according to claim 1 or 2, **characterized in that** the top and/or bottom swivel mount (12, 11) is configured to be a torsion spring bearing (15, 16), in particular, a rubber torsion spring bearing.

4. The apparatus according to claim 2 or 3, **characterized in that** the torsion spring bearing (15, 16) is formed of an internal square rod (25) and a correspondingly inside square housing (22, 23, 24) having spring elements (29) of rubber or the like in the corner areas formed by the internal square rod (25) and the housing (22, 23, 24), for enlarging the maximum deflection angle consisting of at least two individual torsion springs coupled in series in a spring effective way, so that the overall resulting deflection angle of the torsion spring bearing (15,16) corresponds to the sum of the deflection angles of the individual torsion springs.

5. The apparatus according to claim 4, **characterized in that** of three individual torsion springs formed side by side on a continuous internal square rod (25) having separate housings (22, 23, 24) and spring elements (29), a double spring, i.e. a torsion spring having a double deflection angle, is created, wherein the two lateral housings (22, 23) are coupled in a torsion resistant manner and form one end of the double spring while the middle housing (24) is the other end of the double spring.

6. The apparatus according to claim 5, **characterized in that** one arm of the lamella holder (7) via which a connection is made between the bottom and the top torsion spring bearing (15, 16) has its top end attached to the middle housing (24) of the top torsion spring bearing (16) configured as a double spring and/or has its bottom end coupled to the middle housing (24) of the bottom torsion spring bearing (15) configured as a double spring, while the two lateral housings (22, 23) are each commonly attached to a lamella plate (31) (top torsion bearing (16)) and to a foot (bottom torsion bearing (15)) of the stripping element (6).

7. The apparatus according to any one of the preceding claims, **characterized in that** the effective line (W) of the stripping edge (9) of the stripping lamella (8) in the stripping position of the stripping lamella (8) at the belt (1) extends in the bottom 90° sector between the horizontal and the vertical centre planes of the contact angle of the belt (1) on the pulley (2) - in particular, however, in the so-called three o'clock position.

8. The apparatus according to any one of the preceding claims, **characterized in that** the attack angle of the stripping lamella (8) in its peeling-off stripping position at the belt (1) is in the angle range of between about 40° and about 80° against the tangent to the radius of the angle of contact of the belt (1) at the pulley (2) in the point of the effective line (W) of the stripping edge (9) of the stripping lamella (8), in particular, however, is about 60°.

9. The apparatus according to any one of the preceding claims, **characterized in that** the axis (13) of the bottom swivel mount (11) on the pulley side of the tangent to the radius of the angle of contact of the belt (1) at the pulley (2) is in the point of the effective line (W) of the stripping edge (9) of the stripping lamella (8), and the axis (14) of the top swivel mount (12) is on the side of the tangent facing away from the pulley (2).

10. The apparatus according to claim 9, **characterized in that** the axis (13) of the bottom swivel mount (11) is on or close to the tangent.

11. The apparatus according to any one of the preceding claims, **characterized in that** the distance between the top and the bottom swivel mount (12, 11) is chosen sufficiently great that the angle for the biasing amount of the spring means associated with the bottom swivel mount (15) and the angle for the deflection path of the lamella holder (7) about the bottom swivel axis (13) with obstructions (H) impacting on the stripping lamella (8) are together in the range of between 40° and 80°, however together preferably about 65°.

12. The apparatus according to any one of the preceding claims, **characterized in that** the stripping position of the stripping lamella (8) is adjusted having the desired attack angle of the stripping lamella (8) on the lamella holder (7) and having the right bias of the associated spring means and is fixed by means of an adjustable screw (19) or a spacer or the like.

13. The apparatus according to any one of the preceding claims, **characterized in that** the biasing force of the spring means associated with the bottom swivel mount (15) is adjusted by suitably swivelling the lamella holder (7) about the necessary biasing amount and fixing of the lamella holder (7) in the biased position, e.g. by means of a particularly adjustable screw (17) or by means of a spacer.

14. The apparatus according to any one of the preceding claims, **characterized in that** the setting of the stripping lamellae (8) in the stripping position at the belt (1) is carried out by accordingly swivelling the lamella holder (7) of the stripping elements (6) about the bottom swivel mount (15) accompanied by biasing the associated spring means by adjusting the system carrier (4).

15. The apparatus according to claim 14, **characterized in that** the adjustment and biasing of the lamella holders (7) is carried out by shifting the system carrier (4).

16. The apparatus according to claim 15, **characterized in that** a shifting of the system carrier (4) in a horizontal direction in the case of an effective line (W) of the stripping lamella (8) is in particular in the three o'clock position.

17. The apparatus according to any one of claims 14-16, **characterized in that** the system carrier (4) is carried at both ends directly in horizontally shifting bearings.

18. The apparatus according to any one of claims 14-16, **characterized in that** the system carrier is attached to rigid supports (33) at both ends, each supported in horizontally shifting bearings (32) arranged centrally in the area or in the height of the horizontal axis of the pulley (2) on both ends of the system carrier (4).

19. The apparatus according to any one of claims 14-16, **characterized in that** the system carrier (4) is attached to rigid supports (33) at both ends, the supports being horizontally shiftable by means of bearings (32) each being arranged above the horizontal axis of the pulley (2).

20. The apparatus according to claim 14, **characterized in that** the system carrier (4) is arranged in the area below the effective line (W) of the stripping lamella (8) and the adjustment of the system carrier (4) is done by rotating or swivelling of the same by having a torque act on the system carrier (4) itself or on its swivelling bearing.

21. The apparatus according to claim 20, **characterized in that** the torque is generated pneumatically, hydraulically or mechanically by means of tension, pressure or torsion springs or by weight forces or the like.

22. The apparatus according to any one of claims 14 as well as 20-21, **characterized in that** the torque is generated coaxially between the system carrier (4) and the lateral bearings of the system carrier (4).

23. The apparatus according to any one of claims 14 as well as 20-21, **characterized in that** the torque is generated in bearings below or above the horizontal centre axis of the pulley (2) and each at a distance to this axis, at both ends of the system carrier (4), and the torque causes, via rigid lateral supports (33) carrying the system carrier (4), a swivel movement of the system carrier (4).

## Revendications

1. Dispositif pour racler des impuretés de courroies dans des installations de bandes transporteuses dans la zone d'un tambour d'entraînement et/ou de renvoi de la courroie
- avec un support de système à fixer sur une infrastructure de courroie,
- sur lequel est placé au moins un élément pour racler,
- l'élément pour racler présentant une lamelle pour racler fixée sur un support de lamelle,
- qui, en position de raclage, repose sur la courroie en écroûtant
- et l'élément pour racler présentant un articulation tournante inférieure reliée au support de lamelle avec un axe de rotation horizontal - les indications comme "horizontal" ou équivalent concernent ici et dans ce qui suit fondamentalement la position d'utilisation de l'élément pour racler -
- ainsi qu'un dispositif de ressort qui agit sur le support de lamelle pour appuyer la lamelle pour racler contre la courroie configurée et disposée de telle manière
- que le support de lamelle est pivoté autour de l'axe de rotation horizontal en étant chargé par ressort dans la position de raclement de la lamelle pour racler
- et qu'il peut légèrement dévier son pivotement lors de l'impact d'obstades sur la lamelle pour racler qui adhèrent fermement à la courroie et pivoter à nouveau dans la position prête à être mise en service sur la courroie,
**caractérisé en ce que**
- la lamelle pour racler (8) est positionnée pivotante sur le support de lamelle (7) par une articulation tournante supérieure (12) avec un axe de rotation horizontal (14) et
- est maintenue sous la précontrainte du ressort par un dispositif de ressort supérieur dont l'effet de ressort est en sens contraire par rapport à l'articulation tournante inférieure (11) et à son dispositif de ressort.

2. Dispositif selon la revendication 1, **caractérisé en ce que** le dispositif de ressort qui agit avec l'articulation tournante inférieure (11) sur le support de lamelle (7) et/ou le dispositif de ressort qui agit avec l'articulation tournante supérieure (12) sur la lamelle pour racler (8) est un ressort de torsion.

3. Dispositif selon la revendication 1 ou 2, **caractérisé en ce que** l'articulation tournante supérieure et/ou l'articulation tournante inférieure (12, 11) est configurée comme palier à ressort de torsion (15, 16), en particulier comme palier à ressort de torsion en caoutchouc.

4. Dispositif selon la revendication 2 ou 3, **caractérisé en ce que** le palier à ressort de torsion (15, 16), qui est formé par un carré femelle (25) et un bâti correspondant quadrangulaire à l'intérieur (22, 23, 24) avec des éléments ressorts (29) constitués en caoutchouc ou équivalent dans les quatre zones de coin formées par le carré femelle (25) et le bâti (22, 23, 24) pour augmenter l'angle d'excursion maximal constitué par au moins deux ressorts de torsion individuels reliés en série de manière à être efficaces comme ressorts si bien que l'angle d'excursion qui résulte en tout du palier à ressort de torsion (15, 16) correspond à la somme des angles d'excursion des ressorts de torsion individuels.

5. Dispositif selon la revendication 4, **caractérisé en ce qu'**à partir des trois ressorts de torsion individuels qui sont configurés l'un à côté de l'autre sur un carré femelle continu (25) avec des boitiers séparés (22, 23, 24) et des éléments ressorts (29), il est fabriqué un ressort double, à savoir un ressort de torsion avec un angle d'excursion doublé, les deux boîtiers latéraux (22, 23) étant reliés l'un à l'autre résistants à la torsion et formant une extrémité du double ressort tandis que le bâti du milieu (24) est l'autre extrémité du double ressort.

6. Dispositif selon la revendication 5, **caractérisé en ce qu'**un bras du support de lamelle (7) avec lequel une jonction est réalisée entre le palier à ressort de torsion supérieur et inférieur (15, 16) est fixé avec son extrémité supérieure sur le bâti du milieu (24) du palier à ressort de torsion supérieur (16) configuré comme double ressort et/ou avec son extrémité inférieure au bâti du milieu (24) du palier à ressort de torsion inférieur (15) configuré comme ressort double tandis que les deux bâtis latéraux (22, 23) sont fixés respectivement en commun sur une plaque de lamelle (31) (coussinet de pivotement supérieur 16)) et à un pied (coussinet de pivotement inférieur (15) de l'élément pour racler (6).

7. Dispositif selon l'une des revendications précédentes, **caractérisé en ce que** la ligne d'action (W) du bord racleur (9) de la lamelle pour racler (8) se trouve en position de raclement de la lamelle pour racler (8) sur la courroie (1) dans le secteur de 90° inférieur entre le plan central horizontal et vertical de l'angle d'enroulement de la courroie (1) sur le tambour (2) - en particulier cependant dans ce qu'il est convenu d'appeler la position 3 heures.

8. Dispositif selon l'une des revendications précédentes, **caractérisé en ce que** l'angle d'attaque de la lamelle pour racler (8) dans sa position de raclement écroûtant sur la courroie (1) est situé, dans la plage angulaire d'environ 40° à environ 80° par rapport à la tangente contre le rayon de l'arc d'enroulement de la courroie (1) sur le tambour (2) au point de la ligne d'action (W) du bord pour racler (9) de la lamelle pour racler (8) et est en particulier cependant d'environ 60°.

9. Dispositif selon l'une des revendications précédentes, **caractérisé en ce que** l'axe (13) de l'articulation tournante inférieure (11) se situe sur le côté du tambour de la tangente contre le rayon de l'arc d'enroulement de la courroie (1) sur le tambour (2) au point de la ligne d'action (W) du bord pour racler (9) de la lamelle pour racler (8) et l'axe (14) de l'articulation tournante supérieure (12) sur le côté de la tangente qui est détourné du tambour (2).

10. Dispositif selon la revendication 9, **caractérisé en ce que** l'axe (13) de l'articulation tournante inférieure (11) se situe sur ou tout près contre la tangente.

11. Dispositif selon l'une des revendications précédentes, **caractérisé en ce que** l'écart entre l'articulation tournante supérieure et l'articulation tournante inférieure (12, 11) est choisi aussi grand que l'angle pour le parcours de précontrainte du dispositif de ressort qui est associé au coussinet de pivotement inférieur (15) et l'angle pour le parcours d'excursion du support de lamelle (7) autour de l'axe de rotation inférieur (13) se situent, lorsque des obstacles (H) touchent la lamelle pour racler (8), ensemble dans la plage de 40 à 80°, de préférence cependant font environ 65° ensemble.

12. Dispositif selon l'une des revendications précédentes, **caractérisé en ce que** la position de raclement de la lamelle pour racler (8) est réglée avec l'angle d'attaque souhaité de la lamelle pour racler (8) sur le support de lamelle (7) avec une précontrainte correspondante du dispositif de ressort associé et est fixée au moyen d'une vis réglable (19) ou d'une pièce d'écartement ou équivalent.

13. Dispositif selon l'une des revendications précédentes, **caractérisé en ce que** la précontrainte du dispositif de ressort associé au coussinet de pivotement inférieur (15) est réglée par le pivotement correspondant du support de lamelle (7) autour du parcours de précontrainte nécessaire et la fixation du support de lamelle (7) est réglée dans la position précontrainte par exemple au moyen d'une vis (17) en particulier réglable ou au moyen d'une pièce d'écartement.

14. Dispositif selon l'une des revendications précédentes, **caractérisé en ce que** le réglage des lamelles pour racler (8) dans la position de raclement sur la courroie (1) se fait par un pivotement correspondant du support de lamelle (7) des éléments pour racler (6) autour du coussinet de pivotement inférieur (15) avec précontrainte du dispositif de ressort associé par un déplacement du support du système (4).

15. Dispositif selon la revendication 14, **caractérisé en ce que** le réglage et la précontrainte des supports de lamelle (7) se fait par un déplacement du support du système (4).

16. Dispositif selon la revendication 15, **caractérisé par** un déplacement du support du système (4) dans le sens horizontal dans le cas d'une ligne d'action (W) de la lamelle pour racler (8) en particulier dans une position 3 heures.

17. Dispositif selon une des revendications 14 à 16, **caractérisé en ce que** le support du système (4) est positionné aux deux extrémités directement dans des paliers déplaçables horizontalement.

18. Dispositif selon l'une des revendications 14 à 16, **caractérisé en ce que** le support du système est fixé aux deux extrémités à des supports résistants à la flexion (33) qui sont maintenus respectivement au milieu dans la zone ou à hauteur de l'axe horizontal du tambour (2) sur des paliers (32) placés aux deux extrémités du support du système (4) et pouvant être déplacés horizontalement.

19. Dispositif selon l'une des revendictions 14 à 16, **caractérisé en ce que** le support du système (4) est fixé aux deux extrémités à des support résistants à la flexion (33) qui sont déplaçables horizontalement par des paliers (32) placés respectivement au-dessus de l'axe horizontal du tambour (2).

20. Dispositif selon la revendication 14, **caractérisé en ce que** le support du système (4) est placé dans la zone située au-dessous de la ligne d'action (W) de la lamelle pour racler (8) et le réglage du support du système (4) est effectué par une rotation ou un pivotement de celui-ci, un couple de rotation étant actif sur le support du système (4) lui-même ou sur son positionnement pivotant.

21. Dispositif selon la revendication 20, **caractérisé en ce que** le couple de rotation est produit pneumatiquement, hydrauliquement ou mécaniquement au moyen de ressorts de traction, de pression ou de torsion ou des poids ou équivalent.

22. Dispositif selon l'une des revendications 14 ainsi que 20-21, **caractérisé en ce que** le couple de rotation est produit avec le support du système (4) de même axe entre celui-ci et les paliers latéraux du support du système (4).

23. Dispositif selon l'une des revendications 14 ainsi que 20-21, **caractérisé en ce que** le couple de rotation est produit aux deux extrémités du support du système (4) dans des paliers situés au-dessous ou au-dessus de l'axe central horizontal du tambour (2) et respectivement espacés de cet axe et le couple de rotation provoque un mouvement de pivotement du support du système (4) par des supports latéraux résistants à la flexion (33) qui portent le support de système (4).
